# EUROPÄISCHE PATENTSCHRIFT

(11) **EP 3 254 997 B1**
(45) Veröffentlichungstag und Bekanntmachung des Hinweises auf die Patenterteilung: **06.03.2019**
(21) Anmeldenummer: 17174516.9
(22) Anmeldetag: 06.06.2017
(51) Int. Cl.: B65G 47/88

(54) **VORRICHTUNG ZUM STOPPEN EINES FÖRDERGUTES AUF EINEM FÖRDERER**
DEVICE FOR STOPPING A CONVERTED ITEM ON A CONVEYOR
DISPOSITIF D'ARRÊT D'UNE MARCHANDISE À TRANSPORTER SUR UN CONVOYEUR

(30) Priorität: 06.06.2016 DE 102016110400; 02.06.2017 DE 202017103367 U
(43) Veröffentlichungstag der Anmeldung: 13.12.2017
(73) Patentinhaber: ALTRATEC Automation GmbH, 09221 Neukirchen (DE)
(72) Erfinder: Nowotsch, Jens, 09244 Lichtenau (DE); Ruckstuhl, Clements, 9053 Teufen (CH); Müller, André, 8706 Meilen (CH)
(74) Vertreter: Rumrich, Gabriele

(56) Entgegenhaltungen:
- EP-A2- 0 193 740
- WO-A1-2009/063562
- DE-A1-102006 028 493
- DE-U1- 8 906 202
- FR-A1- 2 729 936
- JP-A- H07 112 822
- JP-A- H07 267 359
- JP-A- H08 108 931
- JP-U- H0 261 825
- US-A- 3 532 201

## Beschreibung

Die Erfindung betrifft eine Vorrichtung zu Stoppen eines Fördergutes auf einem Förderer und findet insbesondere für den Transport von Gütern auf Förderstrecken Anwendung.

Für Vereinzelung und Stoppen von Transportgut in kontinuierlich fördernden Transportsystemen der innerbetrieblichen Verkettung werden in großer Zahl mechanische Stopper genutzt. Bei mechanischen Stoppern hält ein Mechanismus das Fördergut auf dem Förderer zurück und gibt dieses bei Bedarf durch Entfernen dieses Elementes zum Weiterfördern frei. Der Befehl zur Betätigung des Stoppers wird in den meisten Anwendungen in Form eines elektrischen Ausgangs-Signals einer SPS-Steuerung bereitgestellt. Für die Betätigung des Mechanismus kommen überwiegend pneumatische Antriebe zum Einsatz. Je nach Masse, Geschwindigkeit und Beschaffenheit des Fördergutes ist eine Dämpfungsfunktion erforderlich, welche üblicherweise in den Mechanismus zum Zurückhalten des Fördergutes integriert ist.

Dieser Mechanismus muss nach Abschluss der dämpfenden Bewegung in seiner Endlage arretiert werden, damit Fördergut, welches im Rahmen der direkt auf dem Fördersystem ausgeführten Fertigungsprozesse nach oben angehoben wurde, beim Absenken nicht auf die inzwischen wieder ausgefahrene Mechanik abgesetzt wird.

Nach der Freigabe des Fördergutes zur weiteren Förderung wird bis zum Schließen des Stoppers die Dämpfungsmechanik wieder ausgefahren, um für den nächsten Dämpfungsvorgang bereit zu sein.

Bei hydraulischen Dämpfungssystemen, die in der Regel mit einer Rückstellfeder versehen sind, wird diese Funktionalität durch eine Rastung, die nach dem Dämpfungsvorgang die Endlage entgegen der Federkraft erhält sowie einer Entriegelung dieser Rastung, welche durch ein zusätzliches Betätigungselement bei der Hub-Bewegung des Stoppers wirksam wird, gewährleistet.

Bei pneumatischen Dämpfern wird von der Druckluft, die zum Schließen des Stoppers verwendet wird ein Teilvolumen abgezweigt und damit der Dämpfungskolben wieder in seine Ausgangsstellung gebracht.

Auf Grund der stark steigenden Energiepreise sowie der Forderungen, die sich aus dem Umweltschutz ergeben, wachsen die Bestrebungen der Industrie, bei den Fertigungsanlagen den Energieverbrauch kontinuierlich zu senken. Ein großes Potential bietet dabei der Verzicht auf die Verwendung von Druckluft als Energieträger für Bewegungen in Industrieanlagen.

Daher wurden elektrisch angetriebene Stopper entwickelt, die auf Grund der Verwendung komplizierter Mechanismen gegenüber den pneumatischen Lösungen jedoch einen wesentlich höheren Preis besitzen, wesentlich mehr Bauraum benötigen und einen hohen Stromverbrauch aufweisen.

In der Druckschrift JP H07 - 112 822 A wird ein zum Stoppen eines Fördergutes ausgebildeter in einer Winkellage angeordneter Stopper nach dem Oberbegriff des Anspruchs 1 beschrieben. Der Stopper ist derart ausgebildet, dass er mittels einer mechanischen Betätigung verstellbar ist, wobei eine aufwendige Kinematik Anwendung findet. Es wird ein Kurbelwellenantrieb verwendet, welcher mittels eines Getriebes in Form eines Gestänges den Stopper entlang seiner Längsachse um einen Winkel verschiebt und die Hubbewegung erzeugt. Dabei muss der Totpunkt des Kurbelwellenantriebs überwunden werden.

Des Weiteren bedeutet diese Kinematik ein hohes Eigengewicht der beweglichen Teile, wodurch eine hohe Geschwindigkeit zum Lösen des Stoppers von dem Transportgut nicht erreicht wird. Daraus resultiert ein hoher Kraftaufwand und Energieaufwand zum Lösen der Verbindung zwischen Transportgut und Stopper.

Die Druckschrift DE 10 2006 028 493 A1 beschreibt eine Anhaltevorrichtung für eine Fördereinrichtung auf der Werkstückträger transportiert werden. Es findet ein Stoppelement Anwendung, das in und aus einer Bewegungsbahn des Werkstückträgers bewegbar ist. Aufgabe dieser Lösung ist es, eine genaue Positionierung auf einfache Weise zu ermöglichen. Das Stoppelement ist dazu senkrecht positioniert, wodurch hohe Haltekräfte erzeugt werden müssen.

Aus der Druckschrift US 3,532,201 A ist ein Förderbandabstandshalter bekannt, wie er im Bereich der Förderung von Transportgütern Anwendung findet.

In der Druckschrift DE 10 2010 045 290 A1 ist ein Vereinzler mit elektrodynamischem Stellglied benannt. Der Vereinzler weist einen, einen Stößel tragenden Schlitten auf, wobei der Schlitten und mindestens ein Stellglied in dem Gehäuse gelagert sind. Die Der Vereinzler weist einen geringen Energiebedarf auf, ist jedoch zur Reduzierung der Haltekraft auf einer Förderstrecke nicht geeignet.

Aufgabe der Erfindung ist es, eine Vorrichtung zum Stoppen eines Fördergutes auf einem Förderer zu entwickeln, welche einen einfachen konstruktiven Aufbau aufweist, hohe Haltekräfte umsetzt und dabei energiesparend arbeitet.

Diese Aufgabe wird mit den kennzeichnenden Merkmalen des ersten Patentanspruchs gelöst.

Vorteilhafte Ausgestaltungen ergeben sich aus den Unteransprüchen.

Die Erfindung betrifft eine Vorrichtung nach dem Anspruch 1 zum Stoppen eines Fördergutes auf einem Förderer, aufweisend einen Stopper mit einem Nocken zum Stoppen eines Fördergutes, wobei der Nocken im Vergleich zu einer Senkrechten zur Bewegungsrichtung des auf dem Förderer befindlichen Fördergutes in einer Winkelstellung um einen Winkel entlang einer Achse verfahrbar und mittels eines Antriebes betätigbar ist und eine mit dem Stopper verbindbare Dämpfungseinrichtung separat zum Stopper ausgebildet ist, wobei der Stopper mit der Dämpfungseinrichtung in Wirkverbindung steht und der Stopper beim Anschlagen des Fördergutes parallel zum Förderer in Richtung der Dämpfungseinrichtung bewegbar ist und die Dämpfungseinrichtung einen Hebel aufweist, wobei der Hebel mittels des diesen überfahrenden Fördergutes betätigbar ist derart, dass die Dämpfungseinrichtung und der Dämpfer mittels des Hebels in ihre Ausgangslage bringbar sind.

Der gesamte Stopper einschließlich seines Antriebs weist dazu eine Schrägstellung entlang einer Achse A um den Winkel β gegen die Senkrechte zur Bewegungsrichtung des Fördergutes auf.

Bevorzugt ist der Nocken in einer Linearführung des Stoppers mit einer hohen Geschwindigkeit verstellbar, wobei der Nocken auf Grund der Schrägstellung im Winkel und der hohen Geschwindigkeit beim Verstellen zur Freigabe des Fördergutes vom wieder anlaufenden Fördergut nicht einholbar ist, sodass nach dem Abreißen des Nockens vom Fördergut die erforderliche Kraft für den Antrieb des Nockens auf die Eigenreibungskraft des Systems Antrieb-Nocken-Führung reduzierbar ist.

Für die Verstellung weist der Stopper eine anwendungsabhängige Kraft-Weg-Kennlinie und Weg-Zeit-Kennlinie auf. Im Moment des Starts der Bewegung des Nockens wird durch den Antrieb eine Kraft von mindestens 300 N, bevorzugt von ca. 400N oder darüber realisiert, die dann im Verlauf der ersten zwei Millimeter der Bewegung und damit nach Abreißen des Nocken vom Fördergut und der Beschleunigungsphase stark abfällt. Die verbleibende Antriebskraft, die sich zwischen ca. 60 und 150 N bewegt, dient lediglich noch zur Überwindung der Eigenreibung im Stopper.

An die Linearführung unterhalb des Nockens schließt sich der Antrieb an, der direkt mit dem Nocken verbunden ist und in dem gleichen Winkel wie der Nocken geneigt ist. Dadurch reduziert sich die Reibung des Systems Stopper auf den Nocken, die Führung und den insbesondere elektrisch betätigbaren Antrieb.

Der Stopper bzw. der Nocken des Stoppers weist eine anwendungsabhängige Kraft-Weg-Kennlinie und Weg-Zeit-Kennlinie auf, wobei die Geschwindigkeit und daraus resultierend auch der Weganteil des Stoppers bzw. Nockens dabei erheblich höher in Abhängigkeit der Zeit, als auch in Abhängigkeit des Weges im Vergleich zu den jeweiligen Kennlinien des Fördergutes liegen.

Zum Erreichen der hohen Beschleunigungswerte und Geschwindigkeiten ist der Antrieb in Form eines elektrischen Antriebs, vorzugsweise in Form eines Umkehr-Hubmagnets ausgebildet, wobei eine Betätigungsstange des Umkehrhubmagneten direkt mit dem Nocken verbunden ist und dadurch die Stellbewegung des Umkehrhubmagneten direkt auf den Nocken übertragen wird. Alternativ ist der Nocken direkt an dem Umkehr-Hubmagnet ausgebildet, z.B. direkt an der Betätigungsstange des Umkehrhubmagneten so dass keine weiteren Verbindungselemente zwischen dem Nicken und der Betätigungsstange des Umkehrhubmagneten erforderlich sind. Ist der Nocken separat ausgebildet und an der Betätigungsstange des Umkehrhubmagneten befestigt kann der Nocken auch höhenverstellbar an der Betätigungsstange angebracht sein.
Vorteilhafter Weise wird dabei immer die in einem Winkel zur Senkrechten vollführte lineare Hubbewegung des Umkehr-Hubmagnets direkt an den Nocken übertragen, der in dem gleichen Winkel in der Linearführung angeordnet ist.

Die Anordnung des Nockens mit direkter Verbindung an den Umkehr-Hubmagnet ermöglicht eine Beschleunigung des Nockens von über 300m/s² vorzugsweise von 400m/s² oder mehr und eine Geschwindigkeit des Nockens (3) von über 1m/s, vorzugsweise in der Größenordnung von 1,5 bis 2 m/s oder mehr.

Der Antrieb des Stopper ist vorzugsweise in Form eines permanentmagnetischen Umkehr-Hubmagneten ausgebildet. Diese generieren schnelle Bewegungen und hohe Halte- und Abreißkräfte in der oberen Endlage und beim Anlaufen.

Des Weiteren weist der Antrieb bei Ausführung als permanentmagnetischer Umkehrhubmagnet im stromlosen Zustand hohe Haltekräfte in seiner Endlage auf.

Der Nocken des Stoppers ist in einer Führung geführt, womit sich die Reibung des Systems Stopper auf den Nocken, die Führung und den elektrischen Antrieb begrenzt.

Die Vorrichtung besteht aus dem elektrischen bzw. elektromagnetisch betätigbaren Stopper sowie der zugehörigen Dämpfungseinrichtung wobei diese nicht in den Stopper integriert sondern als separates Bauteil ausgebildet ist. Dies ermöglicht durch die geringe bewegte Masse beim Öffnen des Stoppers eine sehr schnelle Bewegung unter geringem Energieeinsatz.

Erfindungsgemäß steht der Stopper mit der Dämpfungseinrichtung in Wirkverbindung, wobei der Stopper beim Anschlagen eines Fördergutes parallel zum Förderer in Richtung der Dämpfungseinrichtung bewegbar ist. Während dieser Bewegung wird er durch einen in der Dämpfungseinrichtung befindlichen Dämpfer abgebremst, wobei der Dämpfer ebenfalls parallel zum Förderer montiert ist und beim Anschlagen des Fördergutes an den Stopper komprimiert wird.

Der Stopper ist dafür auf einem Schlitten parallel zum Förderer verschiebbar gelagert, woraus sich die Komprimierung des fest stehenden Dämpfers ergibt.

Die Dämpfungseinrichtung weist erfindungsgemäß einen Hebel auf, wobei der Hebel mittels des diesen überfahrenden Fördergutes betätigbar ist derart, dass die Dämpfungseinrichtung mittels des Hebels in ihre Ausgangslage bringbar ist. Nach dem Passieren des Stoppers wird der Nocken wieder nach oben bewegt und der Zyklus kann von vorn beginnen. Die Rückstellung des Dämpfers erfolgt somit ohne zusätzliche Energie, es wird keine Druckluft benötigt.

Die Erfindung wird nachfolgend an einem Ausführungsbeispiel und zugehörigen Zeichnungen näher erläutert.

Es zeigen:
- Figur 1: den Stopper der Vorrichtung,
- Figur 2: das an dem Stopper anschlagende Fördergut,
- Figur 3: das Lösen des Stoppers und das Anfahren des Fördergutes,
- Figur 4: die erfindungsgemäße Vorrichtung bestehend aus Stopper und Dämpfungseinrichtung,
- Figur 5: die Rückstellung der Dämpfungseinrichtung,
- Figur 6: Diagramm Kraft-Weg des elektrischen Antriebs,
- Figur 7: zwei Diagramme zu Fördergut und Stopper bezüglich des Geschwindigkeits- und Weganteils in Abhängigkeit der Zeit und des Weges.

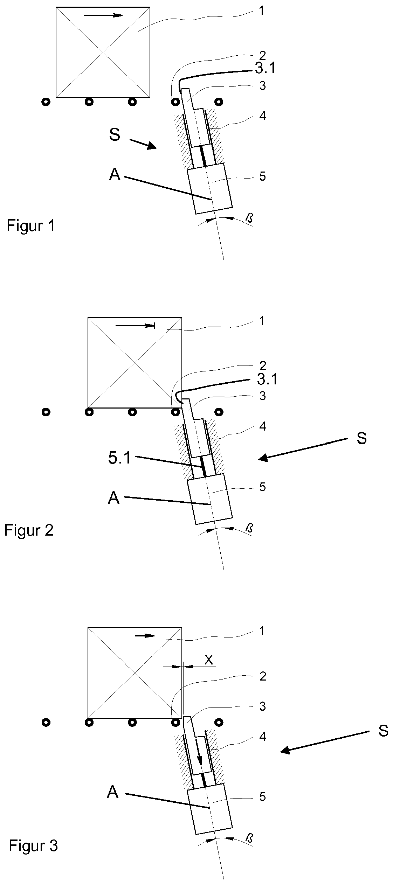

Gemäß Figur 1 bewegt sich das Fördergut 1 auf einem kontinuierlich laufenden Förderer 2. An einer technologisch oder logistisch bestimmten Position des Förderers befindet sich der Stopper S, der im Wesentlichen aus einem Nocken 3 zum Stoppen des Fördergutes 1, einer Führung 4 und einem permanent-elektrischen Antrieb 5 besteht. Der Nocken 3 wird von seiner Führung 4 in einer um den Winkel ß gegen die Senkrechte zur Bewegungsrichtung des Fordergutes 1 gedrehte Richtung entlang einer Achse A geführt und von dem permanent-elektrischen Antrieb 5 betätigt.

Der Antrieb 5 ist in Form eines Umkehr-Hubmagneten ausgebildet und ist mit der Betätigungsstange des Umkehrhubmagneten insbesondere direkt mit dem Nocken 3 verbunden und schließt unterhalb des Nockens 3 sich an die Linearführung 4 anschließend angeordnet, wobei der Umkehr-Hubmagnet (Antrieb 5) die selbe Schrägstellung um den Winkel ß in Bezug auf die Senkrechte aufweist. Es erfolgt eine direkte Übertragung der Hub-Bewegung der Betätigungsstange 5.1 des Umkehr-Hubmagneten (Antrieb 5) auf den Nocken 3.

Der Nocken 3 weist in Richtung zu dem zu stoppenden Fördergut 1 eine Anlagefläche 3.1 auf, die im Wesentlichen senkrecht ausgerichtet ist.

Aufgabe des Nockens 3 ist das Hindern des Förderguts 1 bei laufendem Förderer 2 an der weiteren Bewegung.

Beim Anschlagen des Fördergutes 1 gemäß Figur 2 muss der Stopper S die Bewegungsenergie aufnehmen. Dabei entsteht über ein Kräfteparallelogramm ein Impuls in Bewegungsrichtung des Nockens 3. Nach dem Abbau der Bewegungsenergie verbleibt eine Last in Form einer statischen Kraft durch die Friktion zwischen Förderer 2 und Fördergut 1 auf dem Nocken 3.

Der Antrieb 5 hat eine spezifische Kraft-Weg-Kennlinie, die durch die Kombination eines speziellen Magnetantriebes mit einer Federkombination realisiert wird und besitzt daher im stromlosen Zustand eine große Haltekraft in der Endlage. Dadurch ist er in der Lage, ohne zusätzliche mechanische Einrichtungen zur Kraftumkehr (z.B. Kniehebel) oder Rastung trotz der Schrägstellung um den Winkel β erhebliche Kräfte aufzunehmen, ohne aus der Endlage gedrückt zu werden.

Figur 3 zeigt das "Öffnen" des Stoppers, wobei nur die Reibungskraft zwischen Nocken 3 und Fördergut 1 sowie in der Führung 4 des Nockens 3 überwunden werden muss. Durch die Friktion setzt sich das Fördergut 1 entgegen seiner mechanischen Trägheit wieder in Bewegung. Auf Grund der Schrägstellung des Nockens 3 und der hohen Anfangsbeschleunigung bzw. Geschwindigkeit des Nockens 3 bei Betätigung des Antriebs 5 (Umkehrhubmagnet) und der in Pfeilrichtung im Winkel β nach unten gerichteten Bewegung des Nockens 3, entsteht sofort ein Spalt X zwischen der Anlagefläche 3.1 des Nockens 3 und dem Fördergut 1. Damit reduziert sich nach dem Abreißen des Nockens 3 vom Fördergut 1 die erforderliche Kraft für den Antrieb des Nockens auf die Eigenreibungskraft des Systems Antrieb-Nocken-Führung.

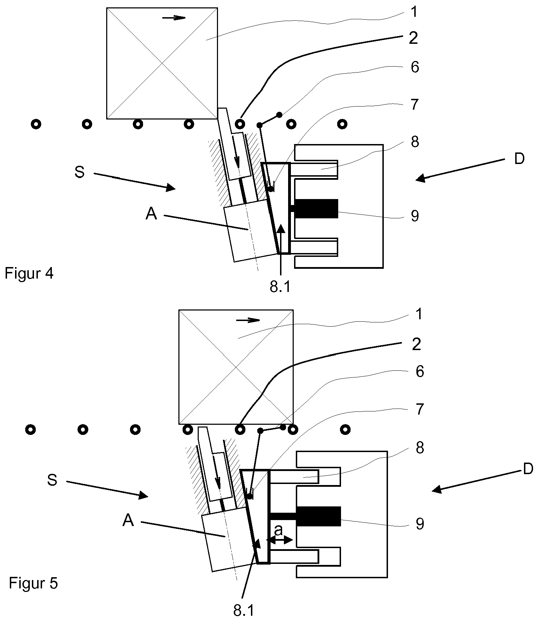

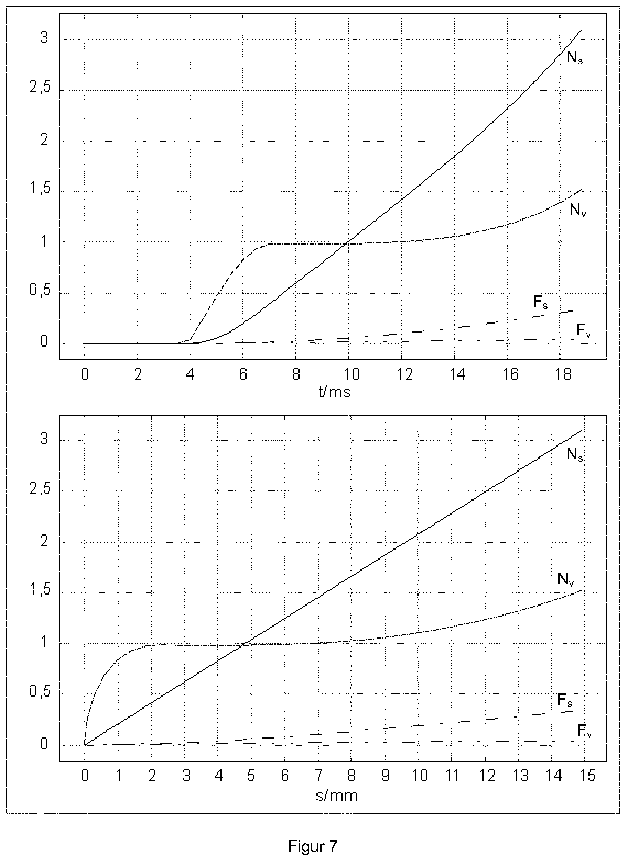

Dieser Mechanismus des Stoppers S beim Öffnen ist nur wirksam, so lange sich der Nocken 3 des Stoppers S so schnell bewegt, dass er vom wieder anlaufenden Fördergut 1 nicht eingeholt wird. (siehe Figur 7). Das bedeutet, die bewegte Masse sollte möglichst gering gehalten werden. Gemäß Figur 4 wird die Dämpfungseinrichtung D nicht in den Nocken 3 integriert.
Der gesamte Stopper S wird an einer separaten Dämpfungsbaugruppe D platziert, die beispielsweise einen geführten Schlitten 8 aufweist, der den Stopper S trägt und eine Druckplatte 8.1 aufweist, mit welcher der Stopper S verbunden ist. Dieser Schlitten 8 bewegt sich parallel zum Förderer 2 und wird in seiner Bewegung durch einen Dämpfer 9 gebremst. Der Dämpfer D ist ebenfalls parallel zum Förderer 2 angeordnet und dämpft den Anschlag des Fördergutes 1 an den Nocken 3.

Um die Dämpfungsbaugruppe D nach dem Passieren des Stoppers 1 ohne zusätzlichen Antrieb wieder um einen Stellweg a (siehe Fig. 5) in die Ausgangsstellung zu bewegen, wird die Energie aus der Bewegung des überfahrenden Fördergutes 1 gewonnen. Gemäß Figur 4 und 5 wird dazu in der Bewegungsbahn des Fördergutes 1 ein Hebel 6 platziert, der durch das Fördergut 1 betätigt wird und mittels eines übertragenden Mechanismus 7 den Stopper S in die Ausgangsstellung gemäß Figur 5 bewegt.

Figur 4 zeigt dabei die Anordnung aus Stopper S und Dämpfungsbaugruppe D nach Abschluss der dämpfenden Bewegung.

In Figur 5 wird gezeigt, wie das Fördergut 1 während des Überfahrens die Dämpfungseinrichtung D wieder um den Stellweg a in seine Ausgangsstellung bewegt hat, da mit dem Hebel 6 der Schlitten 8 mit dessen Druckplatte 8.1 und dem daran aufgenommenen Stopper S wieder um den Stellweg S in die in Figur 5 dargestellte Ausgangslage bewegt wird. Der Nocken 3 befindet sich dabei in einer unteren Position, in welcher das Fördergut 1 den Nocken 3 überfahren kann. Nach dem Passieren des Stoppers S wird der Nocken 3 mit dem Antrieb 5 wieder nach oben in eine obere Position zum Stoppen des Fördergutes 1 bewegt (Fig. 2 und 4) und der Zyklus kann von vorn beginnen.

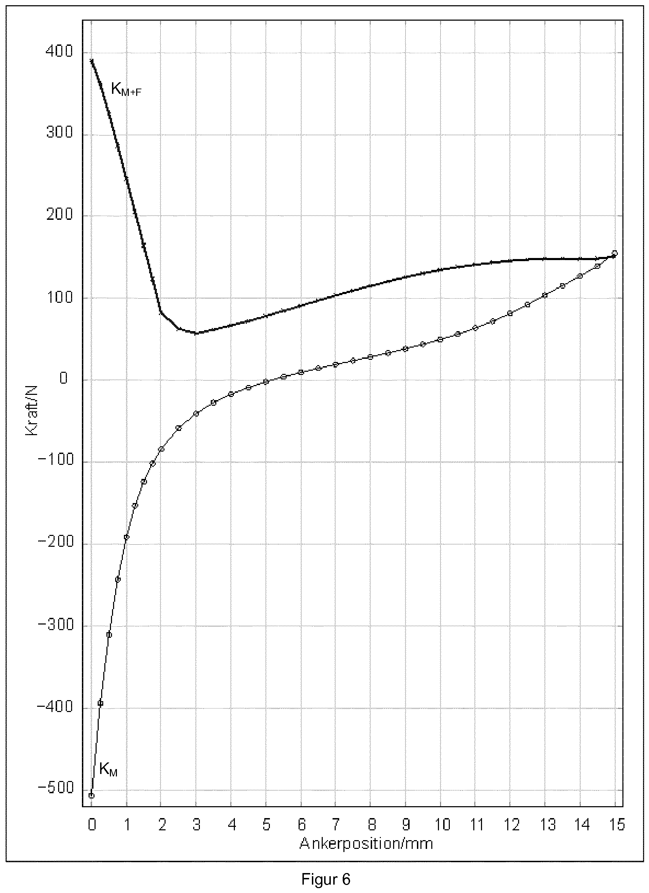

In Figur 6 ist mit der Bezeichnung K_{M} die Kennlinie des Magneten in einem Kraft-Weg-Diagramm dargestellt. Durch die Kombination mit zwei Federn wird im Moment des Starts der Bewegung des Nocken eine Kraft von ca. 400N realisiert, die dann im Verlauf der ersten zwei Millimeter der Bewegung und damit nach Abreißen des Nocken vom Fördergut und der Beschleunigungsphase stark abfällt (Kurve K_{M+F}). Die verbleibende Antriebskraft, die sich zwischen ca. 60 und 150 N bewegt, dient lediglich noch zur Überwindung der Eigenreibung im Stopper.

Figur 7 zeigt in zwei Diagrammen die Abläufe der horizontalen Anteile von Weg Nₛ (Weganteil Nocken), Fₛ (Weganteil Fördergut) und Geschwindigkeit Nᵥ (Geschwindigkeitsanteil Nocken), Fᵥ (Geschwindigkeitsanteil Fördergut) des Stoppernockens sowie des Fördergutes in Abhängigkeit von Zeit und Nockenhub. Das Vorauseilen des Nockens ist anhand der Kennlinien des Fördergutes und Nockens erkenntlich, da diese Kennlinien sich nach dem Start der Bewegung nicht schneiden. Sowohl der horizontale Weganteil, wie auch die Geschwindigkeit des Stoppernockens liegen dabei erheblich höher in Abhängigkeit der Zeit, als auch in Abhängigkeit des Weges im Vergleich zu den jeweiligen Kennlinien des Fördergutes 1. Dieser Effekt wird mittels der Schrägstellung des Stoppernockens 3 um 12° erreicht.

### Bezugszeichenliste

- 1: Fördergut
- 2: Förderer
- 3: Nocken
- 3.1: Anlagefläche
- 4: Führung
- 5: Elektrischer Antrieb
- 6: Hebel
- 7: Übertragender Mechanismus
- 8: Schlitten
- 8.1: Druckplatte
- 9: Dämpfer
- a: Stellweg
- A: Achse
- D: Dämpfungsbaugruppe
- K_{M+F}: Magnetkraft Magnet+Feder
- K_{M}: Magnetkraft Magnet
- Nₛ: horizontaler Weganteil Nocken
- Nᵥ: horizontaler Geschwindigkeitsanteil Nocken
- Fₛ: horizontaler Weganteil Fördergut
- Fᵥ: horizontaler Geschwindigkeitsanteil Fördergut
- S: Stopper

## Patentansprüche

1. Vorrichtung zum Stoppen eines Fördergutes auf einem Förderer, aufweisend einen Stopper (S) mit einem Nocken (3) zum Stoppen eines Fördergutes (1), wobei der Nocken (3) im Vergleich zu einer Senkrechten zur Bewegungsrichtung des auf dem Förderer befindlichen Fördergut (1) in einer Winkelstellung um einen Winkel (β) entlang einer Achse (A) verfahrbar und mittels eines Antriebes betätigbar ist **dadurch gekennzeichnet, dass**
- eine mit dem Stopper (S) verbindbare Dämpfungseinrichtung (D) separat zum Stopper (S) ausgebildet ist,
- wobei der Stopper (S) mit der Dämpfungseinrichtung (D) in Wirkverbindung steht und der Stopper (S) beim Anschlagen des Fördergutes (1) parallel zum Förderer (2) in Richtung der Dämpfungseinrichtung (D) bewegbar ist und
- die Dämpfungseinrichtung (D) einen Dämpfer (9) und einen Hebel (6) aufweist, wobei der Hebel (6) mittels des diesen überfahrenden Fördergutes (1) betätigbar ist derart, dass die Dämpfungseinrichtung (D) und der Dämpfer (9) mittels des Hebels (6) in ihre Ausgangslage bringbar sind.

2. Vorrichtung nach Anspruch 1, **dadurch gekennzeichnet, dass** der Antrieb (5) in Form eines elektrisch betätigbaren Umkehr-Hubmagneten ausgebildet ist.

3. Vorrichtung nach Anspruch 1 oder 2, **dadurch gekennzeichnet, dass** sich an eine Linearführung (4) des Stoppers (S) direkt der Antrieb (5) anschließt oder dass der Antrieb (5) in die Linearführung (4) des Stoppers integriert ist.

4. Vorrichtung nach einem der Ansprüche 1 bis 3, **dadurch gekennzeichnet, dass** der Antrieb (5) über eine Betätigungsstange (5.1) direkt mit dem Nocken (3) verbunden ist oder dass der Nocken (3) direkt an der Betätigungsstange (5.1) des Antriebs (5) ausgebildet ist derart, dass die lineare Stellbewegung des Antriebs (5) direkt an den Nocken (3) übertragbar ist.

5. Vorrichtung nach einem der Ansprüche 1 bis 4, **dadurch gekennzeichnet, dass** der Nocken (3) durch den Antrieb (5) eine Beschleunigung von mindestens 300 m/s² und eine Geschwindigkeit von mindestens 1 m/s aufweist.

6. Vorrichtung nach einem der Ansprüche 1 bis 5, **dadurch gekennzeichnet, dass** der Antrieb (5) in Form eines permanentmagnetischen Umkehr-Hubmagneten im stromlosen Zustand hohe Haltekräfte in seiner Endlage aufweist.

7. Vorrichtung nach Anspruch 1, **dadurch gekennzeichnet, dass** der Dämpfer sich parallel zum Förderer (2) erstreckt, wobei der Dämpfer (9) beim Anschlagen des Fördergutes (1) am elektrischen Stopper (3) komprimierbar ist.

8. Vorrichtung nach einem der Ansprüche 1 bis 7, **dadurch gekennzeichnet, dass** der Stopper (S) an einem Schlitten (8) parallel zum Förderer (2) in Richtung der Dämpfungseinrichtung (D) verschiebbar gelagert ist.

## Claims

1. Device for stopping a conveyed material on a conveyor, having a stopper (S) with a cam (3) for stopping a conveyed material (1), wherein the cam (3) is movable in an angular position about an angle (β) along an axis (A) in comparison with a perpendicular to the direction of movement of the conveyed material (1) located on the conveyor and is actuatable by means of a drive, **characterized in that**
- a damping device (D) connectable to the stopper (S) is formed separately from the stopper (S),
- wherein the stopper (S) is in operative connection with the damping device (D) and the stopper (S) is movable parallel to the conveyor (2) in the direction of the damping device (D) when the conveyed material (1) strikes, and
- the damping device (D) has a damper (9) and a lever (6), wherein the lever (6) can be actuated by means of the conveyed material (1) which passes over it in such a way that the damping device (D) and the damper (9) can be brought into their initial position by means of the lever (6).

2. Device according to claim 1, **characterized in that** the drive (5) is designed in the form of an electrically actuable reversing lifting magnet.

3. Device according to claim 1 or 2, **characterized in that** the drive (5) directly adjoins a linear guide (4) of the stopper (S), or that the drive (5) is integrated into the linear guide (4) of the stopper.

4. Device according to one of claims 1 to 3, **characterized in that** the drive (5) is connected directly to the cam (3) via an actuating rod (5.1) or that the cam (3) is formed directly on the actuating rod (5.1) of the drive (5) in such a way that the linear actuating movement of the drive (5) can be transmitted directly to the cam (3).

5. Device according to one of claims 1 to 4, **characterized in that** the cam (3) has an acceleration of at least 300 m/s² and a velocity of at least 1 m/s by the drive (5).

6. Device according to one of claims 1 to 5, **characterized in that** the drive (5) in the form of a permanent magnetic reversing lifting magnet has high holding forces in its end position in the currentless state.

7. Device according to claim 1, **characterized in that** the damper extends parallel to the conveyor (2), wherein the damper (9) is compressible when the conveyed material (1) strikes the electrical stopper (S).

8. Device according to one of claims 1 to 7, **characterized in that** the stopper (S) is displaceably mounted on a carriage (8) parallel to the conveyor (2) in the direction of the damping device (D).

## Revendications

1. Dispositif pour arrêter un produit transporté sur un convoyeur, présentant un arrêt (S) avec une came (3) pour arrêter un produit transporté (1), la came (3) pouvant être déplacée le long d'un axe (A) dans une position angulaire d'un angle (β) par rapport à une perpendiculaire à la direction de déplacement du produit transporté (1) se trouvant sur le convoyeur et pouvant être actionnée au moyen d'un entraînement,
**caractérisé en ce que**
- un moyen d'amortissement (D) qui peut être relié à l'arrêt (S) est formé séparément de l'arrêt (S),
- l'arrêt (S) étant en liaison fonctionnelle avec le moyen d'amortissement (D) et l'arrêt (S) étant mobile parallèlement au convoyeur (2) dans la direction du moyen d'amortissement (D) lorsque le produit transporté (1) bute contre lui et
- le moyen d'amortissement (D) présentant un amortisseur (9) et un levier (6), lequel levier (6) peut être actionné par le produit transporté (1) passant dessus de telle sorte que le moyen d'amortissement (D) et l'amortisseur (9) peuvent être amenés dans leur position initiale par le levier (6).

2. Dispositif selon la revendication 1, **caractérisé en ce que** l'entraînement (5) est réalisé sous la forme d'un aimant de levage réversible à actionnement électrique.

3. Dispositif selon la revendication 1 ou 2, **caractérisé en ce que** l'entraînement (5) se raccorde directement à un guide linéaire (4) de l'arrêt (S) ou **en ce que** l'entraînement (5) est intégré dans le guide linéaire (4) de l'arrêt.

4. Dispositif selon l'une des revendications 1 à 3, **caractérisé en ce que** l'entraînement (5) est relié directement à la came (3) par une tige d'actionnement (5.1) ou **en ce que** la came (3) est formée directement sur la tige d'actionnement (5.1) de l'entraînement (5) de telle sorte que le mouvement de réglage linéaire de l'entraînement (5) peut être transmis directement à la came (3).

5. Dispositif selon l'une des revendications 1 à 4, **caractérisé en ce que** la came (3) présente grâce à l'entraînement (5) une accélération d'au moins 300 m/s² et une vitesse d'au moins 1 m/s.

6. Dispositif selon l'une des revendications 1 à 5, **caractérisé en ce que** l'entraînement (5) sous la forme d'un aimant de levage réversible à magnétisation permanente présente à l'état sans courant des forces de maintien élevées dans sa position finale.

7. Dispositif selon la revendication 1, **caractérisé en ce que** l'amortisseur s'étend parallèlement au convoyeur (2), l'amortisseur (9) pouvant être comprimé lorsque le produit transporté (1) bute contre l'arrêt électrique (S).

8. Dispositif selon l'une des revendications 1 à 7, **caractérisé en ce que** l'arrêt (S) est monté sur un chariot (8) de manière déplaçable parallèlement au convoyeur (2) dans la direction du moyen d'amortissement (D).
